# EUROPEAN PATENT APPLICATION

(11) **EP 4 503 509 A1**
(43) Date of publication of application: **05.02.2025**
(21) Application number: 24188290.1
(22) Date of filing: 12.07.2024
(51) Int. Cl.: H04L 9/32, B81B 7/00

(54) **DUAL USE MICROELECTROMECHANICAL SYSTEM (MEMS) DEVICE**

(30) Priority: 01.08.2023 US 202363516949 P; 10.05.2024 US 202418661373
(71) Applicant: Honeywell International Inc., Charlotte, NC 28202 (US)
(72) Inventor: HEFFNER, Kenneth H., Charlotte, 28202 (US); COUSSEAU, Peter L., Charlotte, 28202 (US); TUCKER, James L., Charlotte, 28202 (US); HORKHEIMER, Donald Patrick, Charlotte, 28202 (US)
(74) Representative: Haseltine Lake Kempner LLP

(57) **Abstract**

A system that includes: a microelectromechanical system (MEMS) device for generating an output signal at an output of the MEMS device, the MEMS device receiving at least one input signal at an input of the MEMS device; a storage medium configured to store a signal injection function and an output generation function; and a processor, in communication with the MEMS device and the storage medium, the processor configured to run the signal injection function to selectively modify the at least one input signal to produce a modified input signal and to provide the modified input signal to the input of the MEMS device, and that is configured to run an output generation function to extract a random component and a unique component from the output signal, wherein the random component and the unique component are generated by the MEMS device based on the modified at least one input signal.

## Description

### CROSS-REFERENCE TO RELATED APPLICATIONS

This application claims priority to U.S. Provisional Application No. 63/516,949, filed on August 1, 2023, and titled "DUAL USE MICROELECTROMECHANICAL SYSTEM (MEMS) DEVICE," the contents of which are incorporated by reference herein in their entirety.

This application is related to: United States Patent Application serial number 18/661,400 (attorney docket number H233692-US) entitled "CODEPENDENT PHYSICAL UNCLONABLE FUNCTION/RANDOM NUMBER GENERATOR PAIRING FOR PHYSICAL PROVENANCE" filed on even date herewith; United States Patent Application serial number 18/661,416 (attorney docket number H233693-US) entitled "MEMS BASED PUF FOR MECHANICAL TRUST EXTENSION" filed on even date herewith; United States Patent Application serial number 18/661,426 (attorney docket number H233694-US) entitled "ACTIVE TRANSISTOR PHYSICAL UNCLONABLE FUNCTION (PUF) CIRCUIT WITH MEMS UNIQUENESS" filed on even date herewith; United States Patent Application serial number 18/661,437 (attorney docket number H233699-US) entitled "ACTIVE TRANSISTOR RANDOM NUMBER GENERATOR (RNG) CIRCUIT WITH MEMS ENTROPY" filed on even date herewith; all of which are incorporated herein by reference in their entirety.

### BACKGROUND

Cryptographic processes are used to provide data integrity verification, and to protect both the confidentiality of data and the integrity of communication and control of such data stored in distributed electronic hardware systems. These cryptographic processes are designed to prevent attackers from compromising the systems for purposes, including: corrupting command and control, unauthorized maintenance, product cloning/spoofing, unauthorized data access, disinformation, and eavesdropping.

To function properly, the cryptographic processes require a source of random numbers that are not predictable before use nor knowable after use when examined by an unauthorized party. That is random numbers must be unpredictable and used with low observability in cryptographic operations. If a notional random number is susceptible to attack, it would be vulnerable to powerful offline attacks on the associated cryptographic algorithm or its implementation. True random numbers (TRN) are difficult to generate because the criteria for TRN have rigorous proofs and are difficult to use. Thus, many cryptographic systems default to pseudo-random number generators with less rigorous requirements for a formal proof of randomness (e.g., A Bell test). With the advances in processing capacity (e.g., quantum volume) emerging in quantum computing, attacks will become more significant and effective if a better source of true random numbers is not developed.

Furthermore, to avoid compromise to confidential information including the functionality of the embedded device, the system should have an identity not easily spoofed by attackers who may obtain physical possession of the embedded device. To this end, various functions have been developed, referred to generally as "Physical Unclonable Functions" or PUFs. PUFs are designed to produce a unique output that identifies the system. However, many PUFs are vulnerable to manipulation that enables attackers to gain access to the systems and replicate the output of the PUF so that hardware can be surreptitiously replaced.

What is needed are systems and methods that provide improved assurance as to both the identity of the hardware and the randomness of the sources within the system.

### SUMMARY

A system is provided. The system includes: a microelectromechanical system (MEMS) device for generating an output signal at an output of the MEMS device, the MEMS device receiving at least one input signal at an input of the MEMS device; a storage medium configured to store a signal injection function and an output generation function; and a processor, in communication with the MEMS device and the storage medium, the processor configured to run the signal injection function to selectively modify the at least one input signal to produce a modified input signal and to provide the modified input signal to the input of the MEMS device, and that is further configured to run the output generation function to extract a random component and a unique component from the output signal at the output of the MEMS device, wherein the random component and the unique component are generated by the MEMS device based on the modified at least one input signal

### BRIEF DESCRIPTION OF THE DRAWINGS

Embodiments of the present invention can be more easily understood and further advantages and uses thereof more readily apparent, when considered in view of the description of the preferred embodiments and the following figures in which:
FIG. 1 is a block diagram of one embodiment of a system with a microelectromechanical system (MEMS) device with a transform function that enables generation of a unique component and random component in addition to the traditional output of the MEMS device.
FIG. 2 is a flow chart of one embodiment of a process for the signal injection function of FIG. 1.
FIG. 3 is a flow chart of one embodiment of a process for the output generation function of FIG. 1.
FIG. 4A and FIG. 4B are graphs in the frequency domain that illustrate exemplary signals generated by one embodiment of the signal injection function of FIG. 1 for injection into a MEMS device.
FIG. 5 is a block diagram of a system with a plurality of redundant microelectromechanical system (MEMS) devices with a transform function that enables generation of a unique component and random component in addition to a blended output of the redundant MEMS devices.
FIG. 6 is a flow chart of one embodiment of a process for the output generation function of the system of FIG. 5.
FIG. 7 is a block diagram of one embodiment of a system that provides secure communication between nodes using a MEMS device in each node to generate unique components and random components that enable the secure communication.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized, and that logical, mechanical, and electrical changes may be made without departing from the scope of the present invention. The following detailed description is, therefore, not to be taken in a limiting sense.

### Dual Use Microelectromechanical System (MEMS) Device

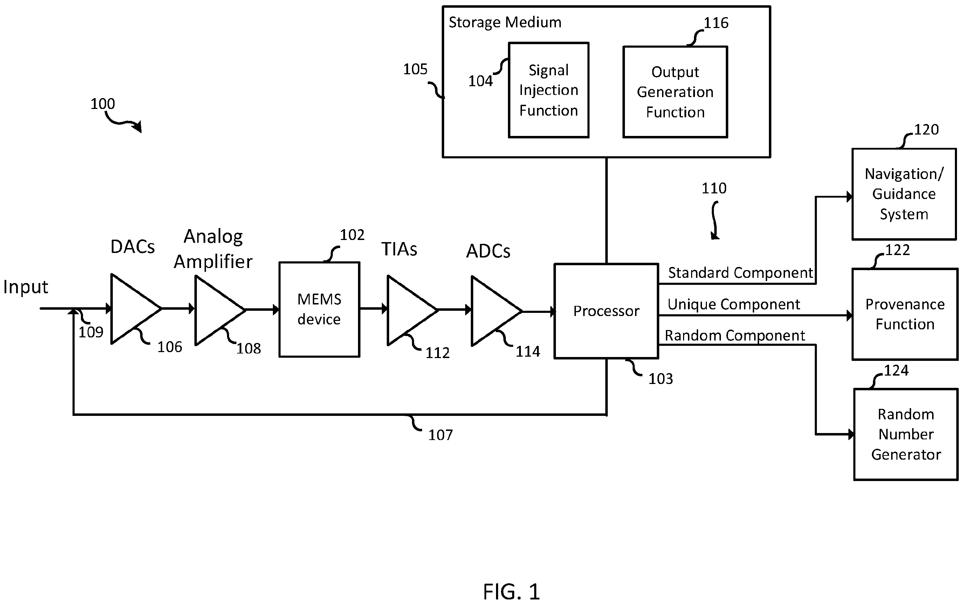

FIG. 1 is a block diagram of one embodiment of a system 100 with a microelectromechanical system (MEMS) device 102 with a transform function that enables generation of a unique component and random component in addition to the traditional or standard output of a MEMS device. In one embodiment, MEMS device 102 is a single MEMS sensor whereas in other embodiments, MEMS device 102 is a plurality of MEMS sensors, as discussed in more detail below. Furthermore, MEMS device 102 may be any type of MEMS device such as an accelerometer, a gyroscope, a pressure sensor, a temperature sensor, airflow sensor or other similar MEMS devices. Each type of MEMS device produces an output signal during its normal operation. This output is referred to herein as the "standard output" or "standard component." For example, accelerometers and gyroscopes produce a standard output that relates to sensed motion, whereas a pressure sensor provides a standard output that relates to a measured pressure. Temperature and airflow sensors provide a standard output in terms of temperature and flow rate, respectively. A particular MEMS device may be used in system 100 if the MEMS device enables harvesting from the output of the MEMS device (1) a unique component due to process variations during fabrication that create unique aspects to the MEMS device and (2) a random sequence from noise within the MEMS device. For pedagogical purposes, system 100 is described in the context of a MEMS device that is a motion sensor as part of a navigation/guidance system, e.g., a MEMS accelerometer or a MEMS gyroscope. It is understood that the teachings of the present application are not intended to be limited to motion sensors.

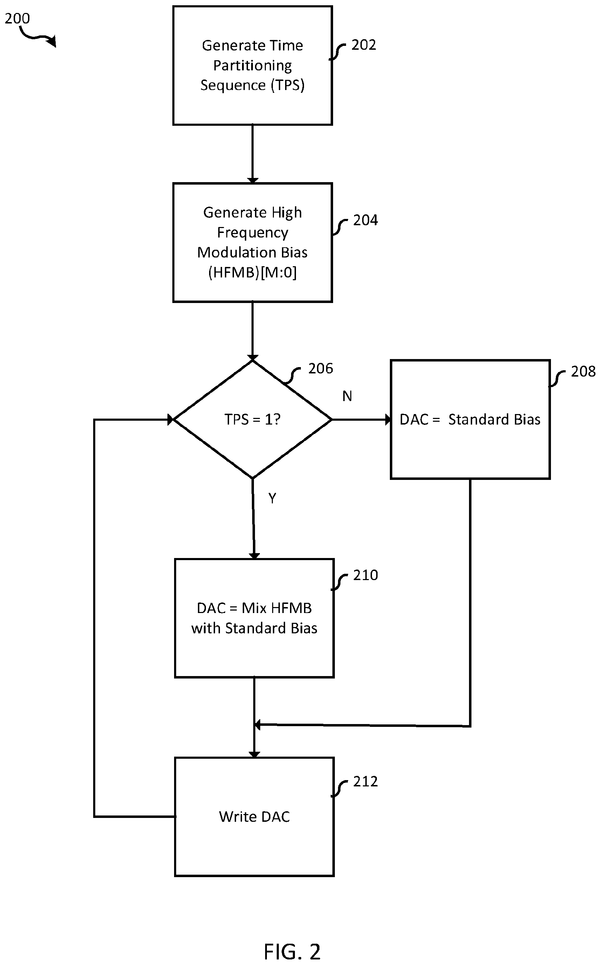

System 100 includes additional circuitry that enables harvesting of the unique component and the random component from MEMS device 102. Specifically, system 100 includes processor 103 and executable code for two functions stored on storage medium 105. The first function is signal injection function 104 and the second function is output generation function 116. The signal injection function 104, when run on processor 103, causes processor 103 to generate and provide a digital stimulus signal 107 for MEMS device 102. Digital stimulus signal 107 is combined with an input signal for MEMS device 102 at 109, e.g., a bias signal for MEMS device 102. The combination of the input signal and the digital stimulus signal 107 are provided to MEMS device 102 through digital-to-analog converter (DAC) 106 and analog amplifier 108. DAC 106 is configured to convert the combined signal to an analog stimulus signal, and analog amplifier 108 amplifies the output of DAC 106. One embodiment of signal injection function 104 is provided in FIG. 2 and is described in more detail below.

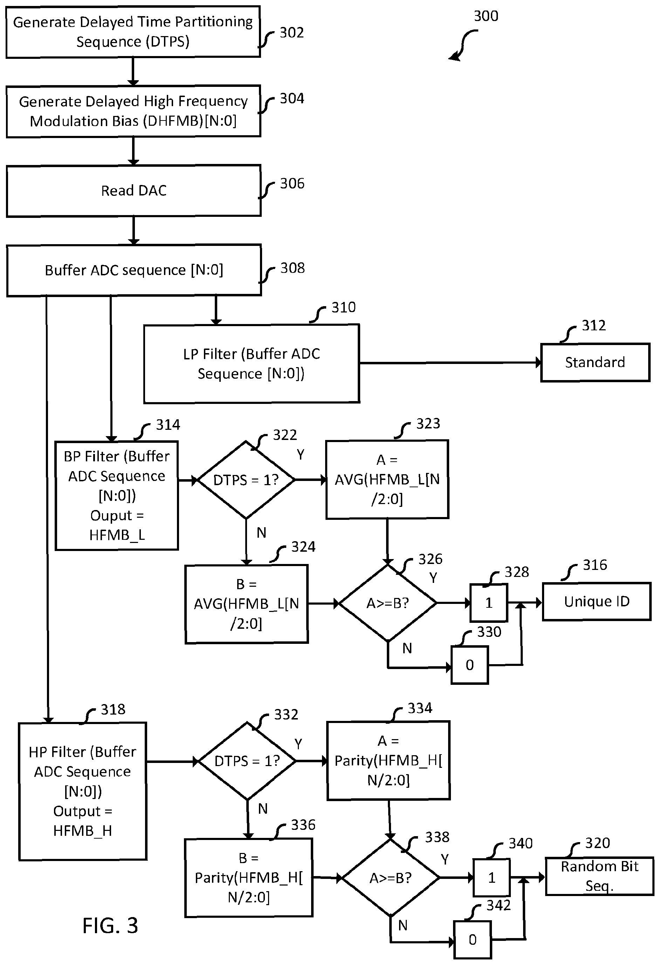

The analog stimulus signal, initiated by signal injection function 104, causes a corresponding analog output signal from MEMS device 102 that carries the data that enables the harvesting of the unique component and the random component from MEMS device 102. System 100 includes a transimpedance amplifier 112 that is coupled to the output of MEMS device 102. In embodiments with more than one MEMS device 102, one transimpedance amplifier 112 is provided for each MEMS device 102. Transimpedance amplifier 112 receives and amplifies the output of MEMS device 102 and provides the amplified output to analog-to-digital converter 114 to convert the amplified output to the digital domain. This digital version of the output of MEMS device 102 is then processed by output generation function 116, when run on processor 103, to break out the three component output signals 110; namely, the standard (e.g., motion) component, the unique component, and the random component. One embodiment of the output generation function 116 is shown by way of example in FIG.3.

Processor 103 may be implemented using one or more processors, a field programmable gate array (FPGA), an application specific integrated circuit (ASIC), a controller or other circuit used to execute instructions in an electronic circuit. Storage medium 105 can include any available storage media (or computer readable medium) that can be accessed by a general purpose or special purpose computer or processor, or any programmable logic device. Suitable computer readable media may include storage or memory media such as semiconductor, magnetic, and/or optical media, and may be embodied as a program product comprising instructions stored in non-transitory computer readable media, such as random access memory (RAM), read-only memory (ROM), non-volatile RAM, electrically-erasable programmable ROM, flash memory, or other storage media.

In this embodiment, system 100 provides three component output signals 110 to separate functions. First, the standard (e.g., motion) component of three component output signals 110 is provided to, for example, a navigation/guidance system 120 to be used in providing data for navigation/guidance system 120 to perform navigation and guidance functions, for example, for a vehicle. Further, system 100 provides the unique component of three component output signals 110 to provenance function 122 to provide data that verifies the integrity of system 100. Finally, system 100 provides the random component of three component output signals 110 to random number generator 124 to be used, for example, in a cryptographic process.

The operation of output generation function 116 and signal injection function 104 are coordinated by processor 103 so that three component output signals 110 may be extracted from the output signal from MEMS device 102.

In operation, signal injection function 104 creates a signal to be injected into MEMS device 102. In one embodiment, this signal is used to modify an existing signal input into MEMS device 102, such as the bias signal. The signal from signal injection function 104 is passed to MEMS device 102 through digital-to-analog converter 106 and analog amplifier 108. The injected signal is processed by MEMS device 102 while MEMS device 102 performs its normal or standard function. The output of MEMS device 102 is then passed by transimpedance amplifier 112 and analog-to-digital converter 114 to output generation function 116. Output generation function 116 then extracts three component output signals 110 and provides the components to navigation/guidance system 120, provenance function 122, and random number generator 124.

In some embodiments, signal injection function 104 limits injection of the signal into MEMS device 102 to times during which system 100 is not operating to perform its standard function, e.g., to sense motion. Further, in other embodiments, even when system 100 is performing its standard function. e.g., sensing motion, signal injection function 104 may inject the signal into MEMS device 102 so that system 100 may harvest the unique component and the random component while simultaneously discarding the standard (motion) component to avoid increasing the error rate for system 100. Thus, in both cases, injecting the signal into MEMS device 102 does not interfere with the normal or standard operation of system 100.

In other embodiments, signal injection function 104 may increase the error rate in system 100. However, by proper design of signal injection function 104 and output generation function 116, the increase in errors caused by injecting the signal into MEMS device 102 does not prevent system 100 from operating properly. Further, when MEMS device 102 comprises a plurality of redundant MEMS sensors, the redundant MEMS sensors can accept bias inputs at different times to enable better error distributions.

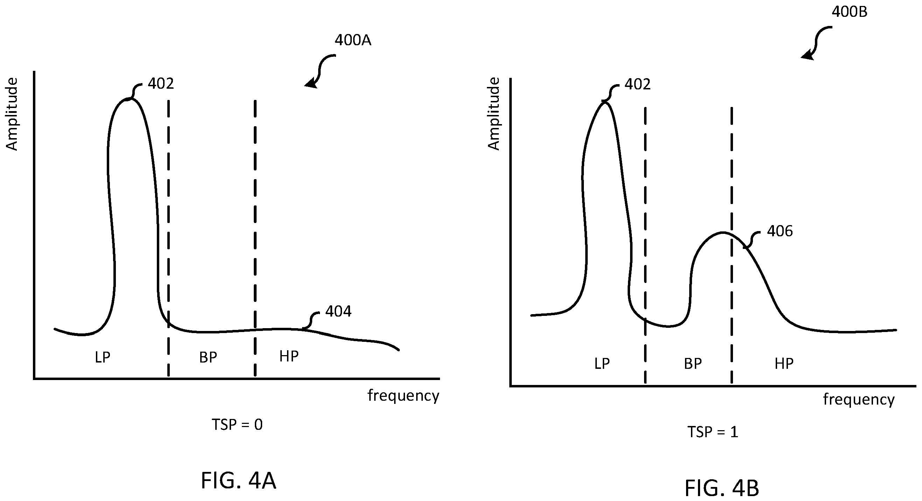

FIG. 2 and FIG. 3 provide examples for functions that implement signal injection function 104 and output generation function 116, respectively, that enable operation of system 100 even when system 100 is in operation (motion). The functions illustrated in FIG. 2 and FIG. 3 are described in more detail below. It is noted that FIG. 2 and FIG. 4B illustrate that the signal injection function 104 of FIG. 1 generates a modified bias signal by adding a high frequency component to the bias signal. It is understood that this embodiment of signal injection function is provided by way of example and not by way of limitation. In other embodiments, signal injection function 104 may modify a different signal used in MEMS device 102 and may modify the signal by inserting a signal at a different frequency (lower or higher) or may modify the signal input into MEMS device 102 in some other way so long as the injected signal can be separated from the normal output of MEMS device 102 by output generation function 116.

As mentioned above, in some embodiments, MEMS device 102 includes more than one MEMS sensor. For example, system 100 may include motion sensors on each axis of system 100 (X, Y and Z axes) to track motion in each axis of three-dimensional space. In such an embodiment, system 100 includes at least one MEMS device 102 for each axis. In operation, output generation function 116 separates the three component output signals 110 (motion, unique and random) for each MEMS device 102 (X, Y and Z axes). In this embodiment, output generation function 116 also combines the random and unique components, respectively, for the three axes to produce an overall unique component and an overall random component for system 100.

It is further noted that system 100 may be implemented by upgrading an existing navigation/guidance system that includes a MEMS sensor to include the transform function implemented in signal injection function 104 and output generation function 116. In this manner, an existing system can be enhanced with improved cryptography using the random component and an improved PUF using the unique component.

FIG. 2 is a flow chart of one embodiment of a process 200 for the signal injection function 104 of FIG. 1. Process 200 is configured to operate in two modes. In one mode, process 200 uses a modified bias signal for MEMS device 102. In a second mode, the bias signal is not modified so that MEMS device 102 uses a conventional (motion) bias signal. If process 200 only operates in this second mode, MEMS device 102 operates in a conventional sense.

Which mode is used by process 200 is defined by a time partitioning sequence (TPS). When the TPS is equal to one, process 200 injects the modified bias signal into MEMS device 102 and when the TPS is equal to zero, process 200 injects the standard bias signal into MEMS device 102. Advantageously, this enables generation of the random component and the unique components only when needed. At all other times, the TPS can be set to zero and MEMS device 102 operates as normal. Thus, any error in the standard (motion) component due to the injection of the modified bias signal is limited to when process 200 is requested to produce the unique component and the random component. Otherwise, the MEMS device 102 operates within normal parameters.

Process 200 begins at block 202 with the generation of the time partitioning sequence (TPS). This defines the times during which the bias signal will be modified to produce the unique component and the random component in the output of MEMS device 102. Process 200 further generates the modified bias signal at block 204. In one embodiment, the modified bias signal includes a high frequency component (High Frequency Modulation Bias (HFMB)[M:0] with M set equal to 1) that is added to the bias signal. In other embodiments, other signals can be added to the normal bias signal, e.g., at other frequencies, to create the modified bias signal so long as the signal does not introduce too much error in the operation of MEMS device 102. Further, using a high frequency component has the advantage of providing a higher random bit rate in the random component of the output of MEMS device 102.

FIG. 4A is a graph of the frequency domain of one embodiment of the standard bias signal 400A when the TPS is equal to zero. As illustrated, the standard bias signal 400A has a low frequency component 402 (also referred to as motion bias). Above this low frequency range (LP), the amplitude of the bias signal 400A is fairly steady except for some noise in the region 404 above the low frequency component 402. Thus, selection of a high frequency component should not interfere with the normal operation of MEMS device 102 but for a potentially small increase in error of MEMS device 102.

FIG. 4B is a graph of the frequency domain of the modified bias signal 400B when the TPS is equal to one. As illustrated, the modified bias signal 400B also has the low frequency component 402 corresponding to the normal operation of MEMS device 102. The modified bias signal 400B also includes the high frequency component 406 (High Frequency Modulation Bias (HFMB[M:0]) that is added to the bias signal to enable generation of the unique component and the random component. In this example, the frequency content of high frequency component 406 spans bandpass (BP) and high pass regions of the frequency spectrum of the bias signal. It is noted that the amplitude of high frequency component 406 is significantly less than the amplitude of low frequency component 402. The amplitude of high frequency component 406 is chosen to be sufficiently high to generate the unique component and the random component while being low enough to reduce the error introduced into MEMS device 102 when being used to produce both the motion component as well as the unique component and the random component. It is noted that the modified bias signal 400B may include the additional signal at a frequency other than the illustrated high frequency component 406.

At block 206, process 200 determines whether the TPS value is equal to one. If not, process 200 sets the value to be written to the digital-to-analog converter 106 to the standard (motion) bias at 208. Otherwise, process 200 mixes the high frequency modulation bias with the standard (motion) bias and sets that value to be written to the digital-to-analog converter 106 at 210. In either case, the selected value is written to digital-to-analog converter 106 at block 212.

FIG. 3 is a flow chart of one embodiment of a process 300 for the output generation function 116 of FIG. 1. Process 300 also uses the time partition sequence defined above to distinguish between the two modes of operation. Due to processing delays between signal injection function 104 and output generation function 116, process 300 generates, at block 302 a delayed time partitioning sequency (DTPS) that is used to determine the mode of process 300. At block 304, process 300 generates a delayed High Frequency Modulation Bias (DHFMB)[N:0] signal. DHFMB signal may be used to help to correct for some of the error in the motion component introduced by injecting the HDMB signal into the bias signal. Modulating the bias input to the system 100 (such as at block 210) may, as a byproduct, introduce noise in the measured signal (see description of block 306 below), in the example, we are introducing the modulation at a distinct frequency to allow us to remove it with filtering later. However, some error may still remain and this delayed copy of the signal (DHFMB) may help to compensate the output of system 100. The DHFMB signal may also help in cases where such a distinct separation is not possible between frequencies for the motion component and the injected signal.

Process 300 reads the value in analog-to-digital converter 114 at block 306. This data is buffered as ADC sequence [N:0] at block 308 so that the data from MEMS device 102 can be block processed to produce the three component output signals 110 of system 100 of FIG. 1.

The data in the buffer is processed through three different filters to provide the three component output signals 110. First, the data is processed through a low pass filter at block 310 to produce the standard (motion) component that is provided at block 312. The low pass filter substantially removes the impact of the high frequency modulation bias and thus the output of the low pass filter is just the motion component of the output of MEMS device 102. Second, the data from the buffer is also passed through a bandpass filter at block 314 that passes a low portion of the high frequency modulation bias signal (See FIG. 4B) to produce a signal, HFMB_L. The HFMB_L signal is used to provide the unique ID at block 316. Finally, the data from the buffer is processed by a high pass filter that, as seen in FIG. 4B, includes a high portion of the high frequency modulation bias signal (HFMB_H). The HFMB_H signal is used to generate the random bit sequence provided at block 320.

Returning to block 318, the output of the high pass filter is further processed to produce the random bit sequence provided at block 320. To do this, process 300 uses the parity of the HFMB_H signal data with high frequency modulation bias added (DTPS = 1) and data without the high frequency modulation bias added (DTPS = 0). At block 332, process 300 determines whether DTPS is equal to 1, and if it is, then a variable A is set to Parity (HFMB_H[N/2:0]). Otherwise, when DTPS is equal to zero, then a variable B is set to Parity (HFMB_H[N/2:0]) at block 336. At block 338, process 300 compares A to B. If A>=B, a value of 1 is output at block 340 and added to the random sequency at block 320. Otherwise, if A is less than B, a value of 0 is output at block 342 and added to the random sequence at block 320.

The output at block 320 will be a random sequence because the frequency of the signal HFMB_H is high. Further, the parity of the HFMB_H signal will be a random number that is highly dependent on the noise of the system. Because comparing the value of parity of the HFMB_H signal with modulation and to the HFMB_H signal without modulation, it will be impossible to predict whether the one with the HFMB or the one without the HFMB will be greater so that gives the random bit output.

Returning to block 314, the output of the bandpass filter is further processed to produce the unique ID provided at block 316. To do this, process 300 uses the average of the HFMB_L signal data with high frequency modulation bias added (DTPS = 1) and data without the high frequency modulation bias added (DTPS = 0). At block 322, process 300 determines whether DTPS is equal to 1, and if it is, then a variable A is set to AVG(HFMB_L[N/2:0]). Otherwise, when DTPS is equal to zero, then a variable B is set to AVG(HFMB_L[N/2:0]) at block 324. At block 326, process 300 compares A to B. If A>=B, a value of 1 is output at block 328 and added to the unique ID at block 316. Otherwise, if A is less than B, a value of 0 is output at block 330 and added to the unique ID at block 316.

The unique ID will produce an output that is sensitive to the sum of the difference between the value output by the bandpass filter (HFMB_L) where the bias is modulated and where it is not. By using a relative measurement approach, some common mode noise effects may be canceled. The bias modulation will be selected such that the MEMS device process variation will create different winners across different amplitudes and frequencies. Averaging is used to get a more stable result.

It is noted that in the embodiment of FIG. 3, the unique ID is generated based on the output of a bandpass filter applied to the ADC buffer and the random bit sequence is generated based on the output of a high pass filter. In other embodiments, the unique ID and the random bit sequence may be produced by filtering out data in other, selected, frequency ranges of the output of the ADC.

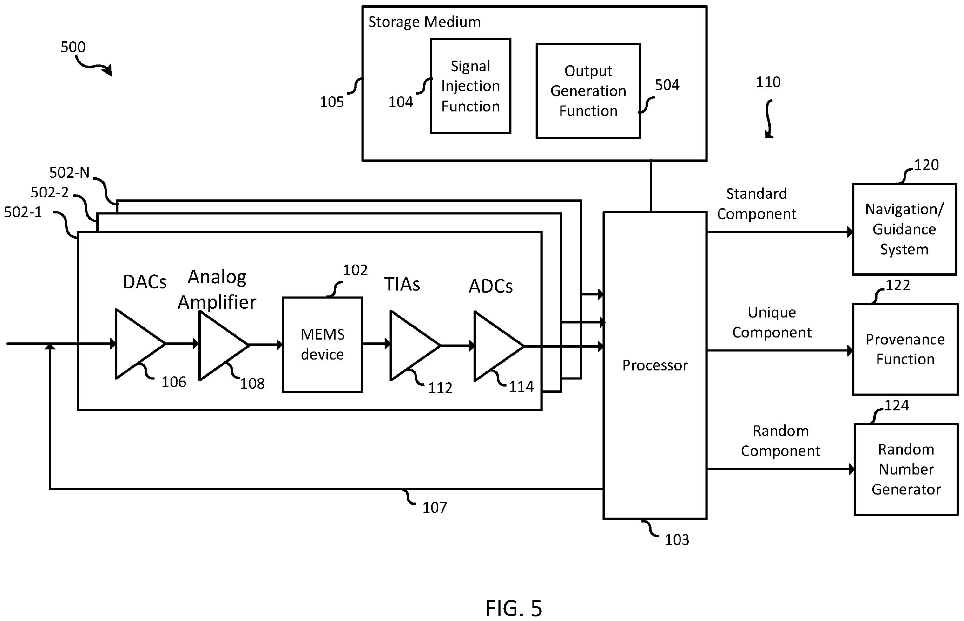

FIG. 5 is a block diagram of a system 500 with a plurality of redundant microelectromechanical system (MEMS) devices 502-1 to 502-N with a transform function that enables generation of a unique component and random component in addition to a blended output of the redundant MEMS devices 502-1 to 502-N. System 500 has similarities with system 100 of FIG. 1. For simplicity, the common components in FIG. 5 are identified with the same reference numerals used in FIG. 1 and are configured and perform as described above. Thus, these components are not described in detail here.

It is noted that the redundant MEMS devices 502-1 to 502-N may be added to modify a system with a single MEMS device, or may already be available in an existing system to improve output resolution via averaging of the outputs of the plurality of MEMS devices.

For purposes of this specification "redundant MEMS devices" means a plurality of MEMS devices that are configured to provide the same output measurement. For example, if the redundant MEMS devices are accelerometers, the plurality of MEMS devices are configured to measure motion about the same axis, such as the X axis, rather than MEMS devices that are aligned with different axes. A function is applied to the outputs of the redundant MEMS devices 502-1 to 502-N, e.g., averaging the outputs of the plurality of MEMS devices 502-1 to 502-N, in order to provide a bended output for the system 500.

In this embodiment, the plurality of MEMS devices 502-1 to 502-N may be used to help isolate non-motion data from motion data where non-motion data is common. Advantageously, the redundant MEMS devices 502-1 to 502-N are used so that the common part (non-motion data) of the sensor output can help the algorithm to differentiate the motion component.

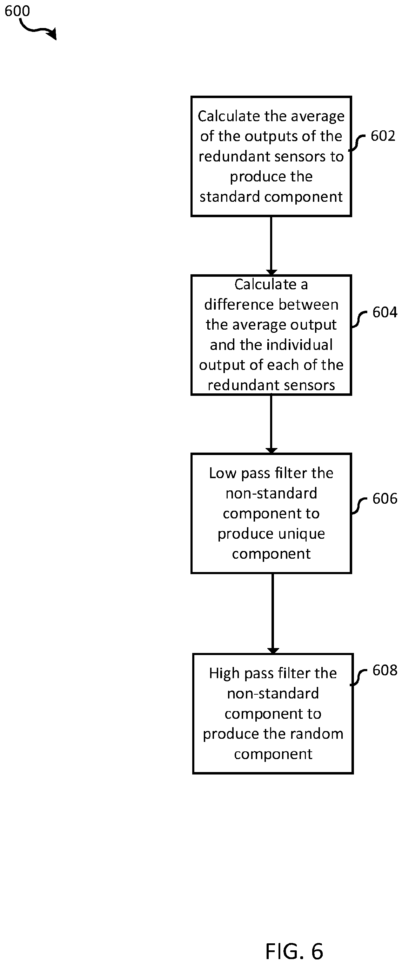

FIG. 6 is a flow chart of one embodiment of a process 600 for the output generation function 504 of the system of FIG. 5. Process 600 averages the outputs of the plurality of MEMS devices 502-1 to 502-N at block 602. At block 604, process 600 computes a difference between the average of the outputs of the plurality of MEMS devices 502-1 to 502-N and the output of each individual MEMS device 502-1 to 502-N to isolate the non-motion (non-standard) components. The non-standard component, containing both the unique component and the random component, for each MEMS device 502-1 to 502-N can then be processed by a low pass filter to gain the unique component at block 606 and processed through a high pass filter to produce the random component at block 608. The unique component and the random components for each for each of the MEMS devices 502-1 to 502-N can then be combined to produce the unique component and the random component of system 500. Redundant sensors can thus improve the previously described methods.

### System Using Nodes with MEMS Devices to Enable Secure Communication

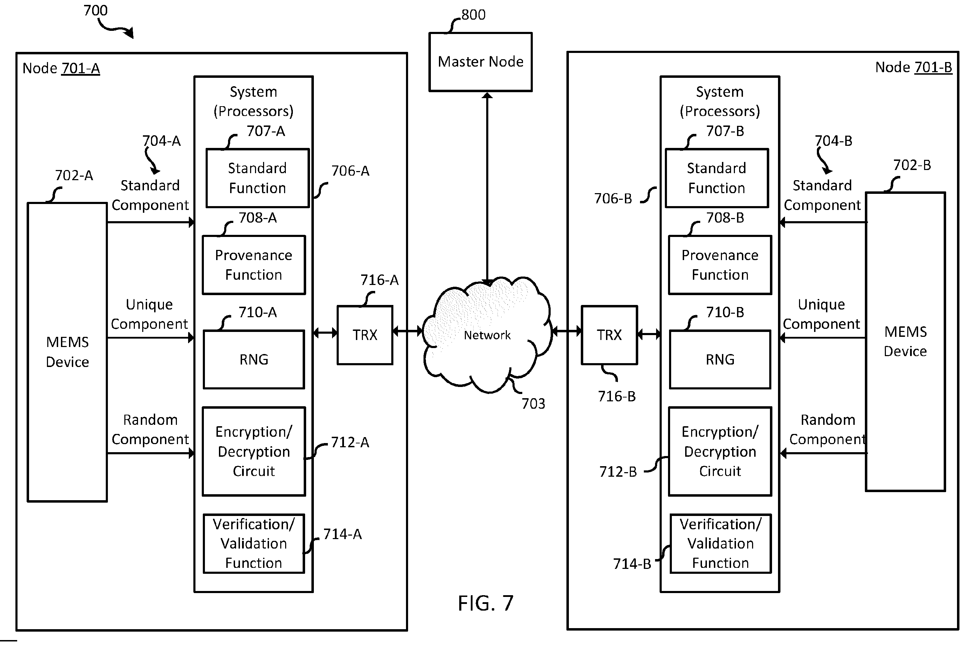

FIG. 7 is a block diagram of a system 700 that includes secure communication between nodes 701 in an exclusive community over network 703 using a unique component and a random component generated by one or more microelectromechanical systems (MEMS) devices 702 in the nodes 701. Examples of protocols for creating the unique component and the random component from the MEMS device are described in more detail above with respect to FIGs. 1, 2, 3, 4A, 4B, 5 and/or 6.

In FIG. 7, system 700 is illustrated with two nodes 701 labelled as node 701-A and node 701-B. It is understood that system 700 may include any appropriate number of nodes 701 and thus system 700 is not limited to a system with two nodes 701. Further, FIG. 7 illustrates node 701-A is coupled to node 701-B over network 703. It is understood that network 703 may comprise one or more of a wireless access point, comm link, wide area network (WAN), local area network (LAN) such as an Ethernet network, cable group, optical fiber, direct connection or any other appropriate system for communicatively coupling nodes 701 of system 700.

Node 701-A and node 701-B each include similar components for secure communication in system 700. Therefore, for simplicity and brevity, only node 701-A is described in detail using reference numerals for each component followed by the designator "-A." It is understood that similar components are also included in Node 701-B identified by the same reference numeral followed by the designator "-B."

Node 701-A includes MEMS device 702-A. In some embodiments, MEMS device 702-A supports two or more functions for node 701-A. For example, MEMS device 702-A provides outputs 704-A that include a standard component, a unique component, and a random component. A first function supported by MEMS device 702-A uses the standard component of output 704-A. For example, MEMS device 702-A may comprise a sensor and the standard component of output 704-A may be a measurement of acceleration, rotation rate, pressure, temperature, airflow, or other measurements associated with a MEMS sensor. A second function supported by MEMS device 702-A uses the unique component and the random component of output 704-A for secure communication with other nodes 701 of system 700. Similar to the description below, MEMS device 702-A is a device that enables harvesting (1) the unique component due to process variations during fabrication that create unique aspects to the MEMS device 702-A, and (2) the random component from noise within the MEMS device 702-A.

Node 701-A also includes system 706-A with one or more processors and memory for storing software or instructions to implement functions for node 701-A. Node 701-A includes a standard function 707-A to support the first function of node 701-A. Standard function 707-A uses, among other things, the standard component of outputs 704-A such that node 701-A implements its standard function that is implemented based on outputs of MEMS device 702-A.

Also, system 706-A of node 701-A also includes instructions or software to implement the second function of node 701-A. Specifically, system 706-A also includes provenance function 708-A, random number generator (RNG) 710-A, encryption/decryption circuit 712-A, and verification/validation function 714-A. RNG 710-A uses the random component from MEMS device 702-A to produce random numbers used by encryption/decryption circuit 712-A to send and receive data securely over network 703. Further, provenance function 708-A uses the unique component from MEMS device 702-A to implement a physical unclonable function (PUF) for node 701-A. Node 701-A also uses provenance function 708-A in conjunction with verification/validation function 714-A to implement authentication that data received or transmitted by node 701-A is from an authorized node in system 700.

In FIG. 7, system 700 also includes a master node 800 that is used to set up or manage the trusted relationship amongst the nodes 701 of system 700 that are in the exclusive community. Specifically, in one embodiment, system 700 uses registry entries to set up/manage the trusted relationship. To do this, for example, each respective node 701 generates a number of registries (e.g., thousands or tens of thousands of registries) using provenance function 708 and the unique component of outputs 704 of MEMS device 702 of the respective node 701. These registries uniquely identify the specific node 701 as part of the trusted system 700. Master node 800 obtains the registries generated by each node 701, e.g., at the time a node is set up, and provides the registries to all other nodes 701 in system 700. These registries are stored as part of the provenance function 708 of each node 701 in the exclusive community and become, in effect, a library of authorized users in the exclusive community for system 700. By using these registry values, a given node will only recognize data received from like-equipped nodes. When data is received over network 703, the receiving node will use the registries in provenance function 708 along with verification/validation function 714 to authenticate the input as originating with an authorized user. For example, the receiving node can verify that the node 701 sending the data has produced an output of a provenance function 708 that corresponds to one of the registries provided by master node 800 and included in its own provenance function 708.

Node 701-A also includes a transceiver 716-A that provides an interface for communicating with other nodes 701, e.g., Node 701-B, over network 703. While a single transceiver 716-A is shown in FIG. 7, it should be understood that the single transceiver 716-A could be replaced with separate and distinct transmitter and receiver components.

In other embodiments, master node 800 may use a mechanism other than registry values to set up or manage the trusted relationship amongst the node 701. For example, in another embodiment, master node 800 plays the role of a certificate authority / certification authority (CA) for applications that use asymmetric cryptography and where the CA could issue digital certificates.

### Glossary

The following terms are defined for purpose of this specification and apply to the various embodiments described in more detail above.

**Random Bit Generator (RBG):** A device or algorithm that outputs a random sequence that is effectively indistinguishable from statistically independent and unbiased bits.

**Deterministic Random Bit Generator (DRBG):** An RBG that includes a DRBG mechanism and (at least initially) has access to a source of entropy input. The DRBG produces a sequence of bits from a secret initial value called a seed, along with other possible inputs. A DRBG is often called a Pseudorandom Number (or Bit) Generator.

**Entropy Source:** The combination of a noise source, health tests, and an optional conditioning component that produce random bitstrings to be used by an RBG.

**Noise source:** The component of an entropy source that contains the nondeterministic, entropy-producing activity. (e.g., thermal noise or hard drive seek times).

**True Random Number Generator:** A device or algorithm that extracts randomness from physical phenomena to generate numbers.

**Random Number Generator:** A device or algorithm that generates a sequence of numbers or symbols that cannot be reasonably predicted better than by random chance.

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

Example 1 includes a system comprising: a microelectromechanical system (MEMS) device for generating an output signal at an output of the MEMS device, the MEMS device receiving at least one input signal at an input of the MEMS device; a storage medium configured to store a signal injection function and an output generation function; and a processor, in communication with the MEMS device and the storage medium, the processor configured to run the signal injection function to selectively modify the at least one input signal to produce a modified input signal and to provide the modified input signal to the input of the MEMS device, and that is further configured to run the output generation function to extract a random component and a unique component from the output signal at the output of the MEMS device, wherein the random component and the unique component are generated by the MEMS device based on the modified at least one input signal.

Example 2 includes the system of example 1, wherein the MEMS device comprises a MEMS device that enables harvesting (1) a unique component due to process variations during fabrication that create unique aspects to the MEMS device and (2) a random sequence from noise within the MEMS device.

Example 3 includes the system of any of examples 1 and 2, wherein the MEMS device is a motion sensor, and wherein the signal injection function is configured to modify the at least one input signal for the MEMS device when the MEMS device is not operating to detect motion.

Example 4 includes the system of any of examples 1 to 3, further including: a digital to analog converter; an amplifier, the amplifier coupled in series with the digital to analog converter; wherein the digital to analog converter is configured to receive the modified input signal from the signal injection function and wherein an output of the amplifier is configured to be coupled to the input of the MEMS device; a transimpedance amplifier; and an analog to digital converter, the analog to digital converter coupled in series with the transimpedance amplifier; wherein to the transimpedance amplifier is configured to receive the output of the MEMS device, and wherein the analog to digital converter configured to provide an input to the output generation function.

Example 5 includes the system of any one of examples 1 to 4, wherein the signal injection function is configured to inject a digital stimulus signal in a frequency range selected such that the output generation function is enabled to extract the unique component, the random component, and a standard component from the output signal at the output of the MEMS device.

Example 6 includes the system of any one of examples 1 to 5, wherein the signal injection function is configured to inject a high frequency component into a bias signal of the MEMS device based on a time partitioning sequence.

Example 7 includes the system of example 6, wherein the processor coordinates operation of the output generation function with the signal injection function.

Example 8. includes the system of example 6, wherein the output generation function is configured to generate the unique component based on the output of a bandpass filter applied to the output signal of the MEMS device and to generate the random component based on the output of a high pass filter applied to the output of the MEMS device.

Example 9 includes the system of any of examples 1 to 8, wherein the output generation function also generates a standard component that corresponds to the standard function of the MEMS device.

Example 10 includes the system of any of examples 1 to 9, wherein the MEMS device comprises a plurality of MEMS devices, wherein each of the plurality of MEMS devices produces a unique component and a random component.

Example 11 includes the system of example 10, wherein the output generation function combines the respective random component and unique component from each of the plurality of MEMS devices to produce the unique component and the random component for the system.

Example 12 includes a method for generating a unique component and a random component in the output of a microelectromechanical system (MEMS) device, the method comprising: receiving an input signal for the MEMS device; selectively modifying the input signal; providing the modified input signal to the MEMS device; receiving an output signal from the MEMS device; and extracting the random component and the unique component from the output signal of the MEMS device, wherein the unique component is generated based on process variations during fabrication of the MEMS device and the random component is generated from noise within the MEMS device.

Example 13 includes the method of example 12, wherein receiving an input signal for the MEMS device comprises receiving a bias signal for the MEMS device.

Example 14 includes the method of any of examples 12 and13, wherein selectively modifying the input signal comprises adding a digital stimulus signal to the input signal in a frequency range selected so at to enable the extracting of the unique component, the random component, and a standard component from the output signal at the output of the MEMS device.

Example 15 includes the method of any of examples 12 to 14, wherein extracting the unique component and the random component includes extracting a standard component.

Example 16 includes the method of any of examples 12 to 15 wherein selectively modifying the input signal comprises: generating a time partitioning sequence; generating a high frequency component; when the time partitioning sequence is high, modifying the input signal with the high frequency component; and when the time partitioning sequence is low, not modifying the input signal.

Example 17 includes the method of example 16, wherein extracting the random component comprises applying a high pass filter to the output signal, extracting the unique component comprises applying a bandpass filter to the output signal, and extracting the standard component comprises low pass filtering the output signal.

Example 18 includes a system comprising: a plurality of nodes; a master node, in communication with the plurality of nodes, the master node configured to set up a trusted community among the plurality of nodes; and wherein each of the plurality of nodes includes: a MEMS device that produces an output that includes a standard component, a unique component, and a random component; a transceiver communicatively coupled to corresponding transceivers of others of the plurality of nodes, the transceiver configured to transmit data to and receive data from the transceivers of the others of the plurality of nodes; a processor, coupled to the MEMS device to receive the output of the MEMS device and coupled to the transceiver, the processor configured to run code for: a random number generator that is configured to use the random component of the output of the MEMS device to produce random numbers; an encryption/decryption function that is configured to use the random numbers from the random number generator to send and receive data securely via the transceiver; a provenance function that is configured to use the unique component from the output of the MEMS device to implement a physical unclonable function (PUF) for the node; and a verification/validation function that is configured to, in conjunction with the prevenance function, authenticate data received or transmitted by the transceiver.

Example 19 includes the system of example 18, wherein the provenance function, when run on the processor is further configured to generate a plurality of registry values using the unique component and to provide the registry values to the master node, the provenance function is further configured to receive registry values from the other nodes of the system.

Example 20 includes the system of example 18, wherein the master node functions as a certificate authority and issues digital certificates to the nodes to use in secure communication in the trusted community.

## Claims

1. A system (100) comprising:
a microelectromechanical system (MEMS) device (102) for generating an output signal at an output of the MEMS device, the MEMS device receiving at least one input signal at an input of the MEMS device;
a storage medium (105) configured to store a signal injection function and an output generation function; and
a processor (103), in communication with the MEMS device and the storage medium, the processor configured to run the signal injection function (104) to selectively modify the at least one input signal to produce a modified input signal and to provide the modified input signal to the input of the MEMS device, and that is further configured to run the output generation function (116) to extract a random component and a unique component from the output signal at the output of the MEMS device, wherein the random component and the unique component are generated by the MEMS device based on the modified at least one input signal.

2. The system of claim 1, wherein the MEMS device comprises a MEMS device that enables harvesting (1) a unique component due to process variations during fabrication that create unique aspects to the MEMS device and (2) a random sequence from noise within the MEMS device.

3. The system of claim 1, wherein the signal injection function is configured to inject a digital stimulus signal in a frequency range selected such that the output generation function is enabled to extract the unique component, the random component, and a standard component from the output signal at the output of the MEMS device.

4. The system of claim 1, wherein the signal injection function is configured to inject a high frequency component into a bias signal of the MEMS device based on a time partitioning sequence.

5. The system of claim 4, wherein the output generation function is configured to generate the unique component based on the output of a bandpass filter applied to the output signal of the MEMS device and to generate the random component based on the output of a high pass filter applied to the output of the MEMS device.

6. The system of claim 1, wherein the MEMS device comprises a plurality of MEMS devices, wherein each of the plurality of MEMS devices produces a unique component and a random component.

7. The system of claim 6, wherein the output generation function combines the respective random component and unique component from each of the plurality of MEMS devices to produce the unique component and the random component for the system.

8. A method for generating a unique component and a random component in the output of a microelectromechanical system (MEMS) device, the method comprising:
receiving an input signal for the MEMS device;
selectively modifying the input signal;
providing the modified input signal to the MEMS device;
receiving an output signal from the MEMS device; and
extracting the random component and the unique component from the output signal of the MEMS device, wherein the unique component is generated based on process variations during fabrication of the MEMS device and the random component is generated from noise within the MEMS device.

9. The method of claim 8, wherein selectively modifying the input signal comprises adding a digital stimulus signal to the input signal in a frequency range selected so at to enable the extracting of the unique component, the random component, and a standard component from the output signal at the output of the MEMS device.

10. The method of claim 8, wherein selectively modifying the input signal comprises:
generating a time partitioning sequence (202);
generating a high frequency component (204);
when the time partitioning sequence is high, modifying the input signal with the high frequency component (210); and
when the time partitioning sequence is low, not modifying the input signal (208).
